# EUROPÄISCHE PATENTSCHRIFT

(11) **EP 2 789 069 B1**
(45) Veröffentlichungstag und Bekanntmachung des Hinweises auf die Patenterteilung: **20.04.2016**
(21) Anmeldenummer: 12797807.0
(22) Anmeldetag: 21.11.2012
(51) Int. Cl.: H02J 5/00, E05B 47/00, H02J 50/10

(54) **VORRICHTUNG ZUR DRAHTLOSEN ÜBERTRAGUNG ELEKTRISCHER LEISTUNG**
DEVICE FOR THE WIRELESS TRANSMISSION OF ELECTRIC POWER
DISPOSITIF DE TRANSMISSION SANS FIL DE PUISSANCE ÉLECTRIQUE

(30) Priorität: 21.11.2011 AT 17212011
(43) Veröffentlichungstag der Anmeldung: 15.10.2014
(73) Patentinhaber: Baumann/Holding/1886 GmbH, 4320 Perg (AT)
(72) Erfinder: WÖRAN, Wolfgang, A-4341 Baumgartenberg (AT); BAUMANN, Franz, A-4342 Perg (AT); ZEITLHOFER, Markus, A-4343 Mitterkirchen (AT); STRAUß, Reinhard, A-4320 Perg (AT); TRAXLER, Martin, A-4400 Steyr (AT); BRANDSTÄTTER, Reinhard, A-4303 St. Pantaleon (AT); GSCHAIDER, Michael, A-2763 Muggendorf (AT); FORSTNER, Gerhard, A-8786 Rottenmann (AT)
(74) Vertreter: Patentanwälte Puchberger, Berger und Partner
(86) Internationale Anmeldenummer: PCT/EP2012/073233
(87) Internationale Veröffentlichungsnummer: WO 2013/076140

(56) Entgegenhaltungen:
- DE-A1- 3 612 761
- DE-A1-102006 042 469
- DE-T2- 69 711 963
- DE-U1- 9 214 905

## Beschreibung

Die Erfindung betrifft eine Vorrichtung zur drahtlosen Übertragung von elektrischer Leistung und elektrischen Signalen umfassend eine an einer mechanischen Struktur, insbesondere in einem Gehäuse oder einem Verkleidungsteil angebrachte erste elektrische Komponente.

Moderne Schließanlagen verfügen in der Regel über elektrisch angetriebene Motorschlösser, die sich im beweglichen Teil eines abschließbaren Elements (beispielsweise Türblatt oder Fensterflügel oder dergleichen) befindet. Die Übertragung von elektrischer Energie und Steuersignalen zwischen einer fix montierten ersten elektrischen Komponente und dem sich im beweglichen Teil befindlichen mechatronischen Schließsystem erfolgt üblicherweise über elektrische Leitungen sowie galvanische Kontakte. Diese Kontakte sind in der Regel als Stecker oder als Schleifkontakte ausgeführt. Hierbei tritt das Problem auf, dass die Herstellung einer verlässlichen Verbindung zwischen den Steckern oder Schleifkontakten zur Daten- und/oder Energieübertragung mehrere Nachteile mit sich trägt.

Die notwendigen elektrischen Leitungen müssen aufwendig aus dem fixen Element, beispielsweise dem Türstock, über eine frei verlegte Kabelverbindung in das Profil des beweglichen Elements, beispielsweise des Türblatts und weiter zum Schließsystem geleitet werden. Hierbei tritt bei der Verwendung von Steckkontakten das Problem auf, dass die Herstellung einer Verbindung zur Energie- und Datenübertragung von einer gebäudeseitigen Steuer- und Versorgungseinheit zu einem türseitigen mechatronischen Schließsystem einen erheblichen Montageaufwand verursacht.

Die herkömmliche technische Umsetzung erfordert das Vorhandensein eines entsprechenden Aluminium- oder Holzprofils am Türblatt. Sollte das Türblatt ohne Profil vorgesehen sein, so ist dieser bekannte technische Lösungsansatz nicht anwendbar. Durch scharfe Kanten an den Ecken des beweglichen Elements wird das Einziehen der Kabel zusätzlich erschwert, wodurch ein Aufscheuern der Isolatorhülle des Kabels verursacht werden kann. Eine schadhafte Isolation der Kabelverbindungen kann zu elektrischen Kurzschlüssen führen, welche die Funktionsweise des Schließsystems massiv beeinträchtigen.

Weiters sind die Kabel an Stellen, an denen es zu Bewegungen kommt, besonders hohen mechanischen Anforderungen ausgesetzt, welche über kurz oder lang zu einem Kabelbruch führen können. Bei der Beaufschlagung mit elektrischer Spannung derartig beeinträchtigter Kabel oder Kontakte besteht ein wesentliches Sicherheitsrisiko (Gefahr eines Stromschlages).

Für bewegliche Elemente, welche in Bereichen positioniert sind, in denen Umwelteinflüsse, insbesondere Feuchtigkeit, Schmutz sowie diverse Öle oder Fette schadhaft auf die Kabel- und Steckkontakte einwirken können, ergibt sich zudem die Problematik der Korrosion der Steckkontakte. Diese kann Kontaktschwierigkeiten hervorrufen, welche von einem Fehlverhalten bis hin zum Totalausfall des Schließsystems führen können.

Weiters sind frei verlegte Kabelverbindungen vom fixen Element zum beweglichen Element aufgrund der beeinträchtigen Optik vom Endkunden nicht erwünscht. Die derzeit handelsübliche Lösung mit Stößelkontakten zur Energieübertragung birgt wie oben erwähnt den großen Nachteil der offenen Kontaktflächen, die durch Auftreten der Korrosion zur Beeinträchtigung bzw. zu Ausfällen des Schließsystems führen kann.

Aus dem Stand der Technik ist es bekannt, zur Übertragung elektrischer Leistung induktiv oder kapazitiv gekoppelte Übertragungsvorrichtungen mit elektrischen Komponenten, die Spulen oder Kondensatoren beinhalten, zu verwenden.

Eine derartige elektromagnetische Kopplung funktioniert jedoch nur über sehr geringe Distanzen zuverlässig. Darüber hinaus sind für das Betätigen mechanischer Schließvorrichtungen zum Teil beträchtliche Kräfte erforderlich, welche nur bedingt durch eine kapazitive oder induktive Kopplung übertragen werden können.

Als großes Problem derartiger Übertragungsmodule hat sich in der Praxis herausgestellt, dass der Abstand zwischen dem elektromagnetischen Sender und dem Empfänger möglichst gering sein muss, um eine hohe übertragbare Leistung sicherzustellen. Dies ist jedoch bei den erfindungsgemäßen Vorrichtungen (Schließsystemen von Türen, Fenstern und dergleichen) nicht gegeben, da diese beträchtliche Schwankungen im Abstand (Spaltmaß) zwischen dem beweglichen und dem fix montierten Teil aufweisen. Dies ist insbesondere aufgrund von Temperaturschwankungen und herstellungsbedingten Toleranzen der Fall. Darüber hinaus sollten Sender und Empfänger stets genau gegenüberliegen, um eine möglichst gute Übertragung zu gewährleisten.

Aus dem Stand der Technik sind weiters Vorrichtungen bekannt, die Spulenarrays verwenden, wobei bei der Übertragung das Spulenpaar mit der besten Kopplung ausgewählt wird. Dadurch werden bewegte Bauteile vermieden, die Lösung wird jedoch nicht allen Anwendungsfällen gerecht. Insbesondere lässt sich damit nicht das Problem lösen, zeitweilig mehr Freiraum zwischen den feldbeeinflussenden elektrischen Komponenten der Übertragungsstrecke bereitzustellen.

Gattungsgemäße Übertragungsvorrichtungen mit beweglichen elektrischen Komponenten sind insbesondere aus den Druckschriften DE 36 12 761 A1, DE 92 14 905 U1 sowie DE 697 11 963 T2 bekannt.

Eine technische Aufgabe der vorliegenden Erfindung besteht somit darin, eine Vorrichtung zum drahtlosen Zuführen einer elektrischen Leistung und/oder elektrischen Signalen aus einem ersten Element zu einem zweiten Element, insbesondere aus einer gebäudeseitigen Versorgungseinrichtung zu einer sich in einem Türblatt befindlichen Verbrauchereinrichtung zu schaffen, wobei die Vorrichtung auch bei Schwankungen im Abstand zwischen Sender und Empfänger zuverlässig arbeiten soll.

Insbesondere soll durch die Vorrichtung sichergestellt werden, dass Sender und Empfänger stets durch einen möglichst geringen Abstand voneinander getrennt sind und eine vordefinierte Übertragungsposition einnehmen.

Diese technischen Aufgaben werden erfindungsgemäß durch eine Vorrichtung gemäß Anspruch 1 gelöst. Dadurch wird erreicht, dass die erste elektrische Komponente derart ausgerichtet werden kann, dass der Abstand zum Übertragungsziel reduziert wird. Die relative Bewegung kann insbesondere als relativ in Bezug auf die mechanische Struktur, in der die elektrische Komponente bewegbar gehaltert ist, ausgeführt sein.

Die Betätigungsmittel können dazu eingerichtet sein, in Abhängigkeit von der Lage einer zweiten elektrischen Komponente in Bezug auf die mechanische Struktur durch eine Bewegung der ersten elektrischen Komponente die elektromagnetische Kopplung zwischen der ersten und der zweiten elektrischen Komponente zu verbessern. Dadurch kann sich die Vorrichtung an verschiedene Ausmaße des Luftspalts bzw. des Abstands zwischen Sender und Empfänger anpassen.

Bei der ersten und/oder der zweiten elektrischen Komponente kann es sich insbesondere um Einrichtungen zur Erzeugung, Erfassung oder Beeinflussung des elektromagnetischen Feldes der Umgebung handeln.

Die mechanische Struktur kann ein Teil eines veränderlichen mechanischen Zusammenhangs sein, an dem die zweite elektrische Komponente angeordnet ist. Dieser mechanische Zusammenhang kann in Form eines Türrahmens mit anhängenden Türblatt, eines Fensterrahmens mit anhängendem Fensterflügel, einer KFZ-Karosserie mit anhängender Schiebetür, Klapptür, Heckklappe oder Schiebedach, oder als lösbarer mechanischer Zusammenhang, insbesondere als in die Führungsschiene eines Haltesystems einschiebbarer Koffer ausgeführt sein.

Die erste elektrische Komponente kann im Gehäuse oder Verkleidungsteil drehbar, verschwenkbar, und/oder verschiebbar an einer Aufhängung, insbesondere einem Drehgelenk, einem Schwenkgelenk, einem Vier- oder Mehrgelenk gelagert sein. Die Betätigungsmittel können in Form von Elektromagneten, Permanentmagneten, Federn, Spangen oder dergleichen ausgeführt sein. Als Betätigungsmittel kann insbesondere zumindest eine Magnetscheibe und/oder zumindest eine Rückstellfeder vorgesehen sein.

Die Wirkkräfte der Betätigungsmittel können derart aufeinander abgestimmt sein, dass bei Annäherung der ersten elektrischen Komponenten an die zweite elektrische Komponente die Komponenten eine Übertragungsposition einnehmen, und bei Entfernung der ersten elektrischen Komponente von der zweiten elektrischen Komponente die Komponenten eine Ruheposition einnehmen.

Die erste und/oder zweite elektrische Komponente kann zum Senden und/oder Empfangen von induktiven oder kapazitiven elektromagnetischen Signalen ausgeführt sein und insbesondere eine Spule oder eine Kondensatorplatte umfassen. Die erste und/oder die zweite elektrische Komponente kann insbesondere als Funkmodul ausgeführt sein. Die erste und/oder zweite elektrische Komponente kann eine elektronische Schaltung umfassen, die in ein Kunststoffmaterial, vorzugsweise einen Polymerwerkstoff, eingebettet und vorzugsweise vollkommen mit Kunststoff ummantelt ist. Die erste und/oder zweite elektrische Komponente kann keilförmig ausgeführt sein, um den Abstand beim Zusammenführen der Komponenten weiter zu reduzieren.

Erfindungsgemäß ist vorgesehen, dass zumindest eine der elektrischen Komponenten in einem Einbaukasten drehbar gelagert ist. In der Praxis hat sich insbesondere gezeigt, dass Ausführungsformen mit um eine Achse verdrehbaren elektrischen Komponente besonders robust sind, da damit einem Verkanten der Komponente bzw. der beweglichen Teile, wie es bei lateral verschiebbaren Teilen aufgrund von Alterung oder Verschmutzung vorkommen kann, Vorschub geleistet wird.

Erfindungsgemäß ist weiters vorgesehen, dass zur Aufnahme der elektrischen Komponenten eine im Einbaukasten drehbar gelagerte Wanne vorgesehen ist. Erfindungsgemäß kann weiters vorgesehen sein, dass das Übertragungsmodul ohne Verwendung einer Wanne drehbar oder verschiebbar im Einbaukasten gelagert ist.

Weiters können Betätigungsmittel zur Positionierung der Wanne im Einbaukasten vorgesehen sein. Die Wanne kann seitliche Drehlager zur Aufnahme eines, eine Rückstellfeder drehbar lagernden Achsstiftes aufweisen, wobei die Rückstellfeder als Schenkelfeder ausgeführt sein kann. Die Betätigungsmittel können erfindungsgemäß in Form von Elektro- oder Permanentmagneten, Federn, Spangen oder dergleichen ausgeführt sein, die im Einbaukasten, in der Wanne und/oder in der elektrischen Komponente angebracht sein.

Es kann erfindungsgemäß vorgesehen sein, dass als Betätigungsmittel eine oder mehrere Magnetscheiben vorgesehen sind. Weiters kann erfindungsgemäß als Betätigungsmittel eine oder mehrere Rückstellfedern vorgesehen sein. Die Wanne und/oder die elektrische Komponente kann über seitliche Ausnehmungen zum Einführen der erfindungsgemäßen Magnetscheiben verfügen. Durch geeignete Positionierung der Magnetscheiben kann gewährleistet werden, dass die elektrische Komponente automatisch eine genau definierte relative Position einnimmt.

Darüber hinaus kann erfindungsgemäß vorgesehen sein, dass die Wanne über seitliche Drehlager zur Aufnahme eines, die Rückstellfeder drehbar lagernden Achsstifts verfügen kann, wobei die Rückstellfeder insbesondere als Schenkelfeder ausgeführt sein kann, deren beide Schenkel einerseits an der Wanne und andererseits am Einbaukasten angreifen können.

Zumindest eine der elektrischen Komponenten kann zur Energieversorgung über seitliche Kontaktflächen verfügen, die über elektrisch leitfähige Achsstifte mit Schleifkontakten an der Rückseite des Einbaukastens verbunden sein können.

Dies ermöglicht eine einfache, robuste und platzsparende Möglichkeit, die elektrische Komponente mit elektrischer Energie zu versorgen, wobei die vorhandenen Betätigungsmittel als elektrische Leiter verwendet werden. Die Schleifkontakte können mit Lötanschlüssen für die Verbindung mit einer elektrischen Energiequelle ausgeführt sein.

Weiters erstreckt sich die Erfindung auf eine Schließvorrichtung die zumindest eine erfindungsgemäße Vorrichtung umfasst. Die Schließvorrichtung kann Betätigungsmittel umfassen, die derart ausgeführt sind, dass die elektrischen Komponenten in einer Ausgangsstellung in ein Gehäuse eingeklappt sind, und bei Annäherung der elektrischen Komponenten diese durch die Betätigungsmittel ausklappen und sich zueinander ausrichten, wodurch eine Reduzierung des Abstands zwischen den elektrischen Komponenten gewährleistet ist. Diese Ausrichtung zueinander kann insbesondere als im wesentliche parallele Ausrichtung ausgeführt sein.

Weiters kann in einer erfindungsgemäßen Schließvorrichtung eine erste elektrische Komponente mit einer Versorgungseinrichtung verbindbar sein, und eine zweite elektrische Komponente mit einer Verbrauchereinrichtung verbindbar sein.

Über die beiden elektrischen Komponenten kann eine unidirektionale oder bidirektionale Datenübertragung erfolgen. Die drahtlose Übertragung erfolgt dabei über beabstandet zueinander angeordnete elektrische Komponenten. Die kontaktlose Zuführung der elektrischen Leistung und/oder die bidirektionale Übertragung von Signalen erfolgt dabei vorzugsweise über eine induktive Kopplung.

Die erfindungsgemäße Schließvorrichtung kann induktiv gekoppelte Spuleneinheiten in den elektrischen Komponenten umfassen, welche neben der Übertragung von Energie auch die bidirektionale Übertragung von Steuersignalen ermöglicht.

Zusätzlich zu den oben erwähnten Vorteilen hat die erfindungsgemäße Vorrichtung den Vorteil, dass das unbefugte Auslesen der übertragenen Informationen oder die Manipulation dieser Informationen nicht oder nur erschwert möglich ist.

Aus diesem Grund bietet sich die erfindungsgemäße Vorrichtung insbesondere für sicherheitsrelevante Anwendungen an. Des weiteren ermöglicht die erfindungsgemäße Vorrichtung eine simple Integration in ein bestehendes Bussystem, wie es beispielsweise in Kraftfahrzeugen oder Gebäuden gebräuchlich ist.

Erfindungsgemäß können die zu übertragenden Datenblöcke auf das Frequenzmuster einer Spuleneinheit aufmoduliert werden und an eine primäre Spule weitergeleitet werden. Eine sekundäre Spule im Empfänger kann das Frequenzmuster aufnehmen, Energie für den Betrieb gewinnen und gleichzeitig die übertragenen Datenblöcke auswerten. Die Datenübertragung zurück kann durch Lastmodulation des Frequenzmusters auf der sekundären Seite erfolgen.

Durch die Verlegung der Steuerfunktion in den Bereich der Tür können Einsparungen von Kabelsträngen sowie eine Reduktion des Bustransfers (Auswertungen werden direkt an der Tür durchgeführt) erzielt werden. Aufgrund des intelligenten Systems wird zudem die Integration von zusätzlichen Sicherheitsfunktionen (Warnsignale, Überlastsicherung, etc.) ermöglicht.

Erfindungsgemäß kann weiters vorgesehen sein, dass die elektronischen Bauteile direkt in ein Kunststoffmaterial, vorzugsweise einen Polymerwerkstoff unter Verwendung der Kunststoffspritzgusstechnologie oder unter Verwendung der Formpresstechnik eingebettet ist. Somit kann die elektronische Schaltung erfindungsgemäß vollkommen mit Kunststoff ummantelt sein. Das Übertragungssystem ist dann hermetisch dicht abgeschlossen und weitgehend gegenüber diversen Umwelteinflüssen unempfindlich. Somit ist ein Einsatz in korrosiver bzw. gefährlicher Umgebung ohne die bereits erwähnten Probleme möglich. Eine derartige Kapselung der elektronischen Bauteile führt auch zu einer erhöhten Manipulationssicherheit und erschwert das unbefugte Auslesen von Informationen.

Durch eine geeignete Positionierung und Abstimmung der Übertragungskomponenten können aufwendige Montageschritte wie das Einziehen des Kabelstrangs bzw. die Herstellung der Kontaktierung entfallen.

In Folge dessen können Zeiteinsparungen sowie eine Steigerung der Prozesssicherheit in der Fertigung erzielt werden. Erfindungsgemäß kann weiters vorgesehen sein, dass zur Kapselung der elektrischen Komponenten ein Ferritmaterial verwendet wird.

Um in geschlossenen Zustand ein geeignetes minimales Spaltmaß zwischen Sende- und Empfangsvorrichtung zu erreichen, können die besonderen Gegebenheiten im Gebäudebereich berücksichtigt werden. Bestehende Spaltmaße, die bei Temperaturänderung variieren und sich unterschiedlich auswirken können, können dadurch ausgeglichen werden.

Zur optimalen Gestaltung kann zur Positionierung der Kunststoffbauteile, in denen die Komponenten der Übertragungsvorrichtung integriert sind, insbesondere der Bereich um das Türschloss dienen, da hier die Spaltmaße der Tür im realen Einsatz am wenigsten variieren. Erfindungsgemäß kann vorgesehen sein, dass die elektrischen Komponenten und/oder die Wanne keilförmig ausgeführt sind, um im geschlossenen Zustand einen Formschluss zu erreichen.

Weitere erfindungsgemäße Merkmale sind aus der Beschreibung, den Zeichnungen und den Ansprüchen ersichtlich.

Die Erfindung wird nun anhand von Ausführungsbeispielen näher erläutert.
- Fig. 1: zeigt eine dreidimensionale schematische Ansicht eines ersten Ausführungsbeispiels der erfindungsgemäßen Übertragungsvorrichtung.
- Fig. 2: zeigt eine schematische Explosionsdarstellung des Ausführungsbeispiels einer erfindungsgemäßen Übertragungsvorrichtung aus Fig. 1.
- Fig. 3: zeigt eine schematische Explosionszeichnung eines zweiten erfindungsgemäßen Ausführungsbeispiels.
- Fig. 4: zeigt ein schematisches Ausführungsbeispiel einer erfindungsgemäßen Schließvorrichtung unter Verwendung von zwei erfindungsgemäßen Übertragungsvorrichtungen.
- Fig. 5a und Fig. 5b: zeigen schematische Querschnitte durch eine erfindungsgemäße Schließvorrichtung in einer Ruheposition (Fig. 5a) und einer Übertragungsposition (Fig. 5b).
- Fig. 6a - 6c: zeigen schematische Ansichten einer erfindungsgemäßen Schließvorrichtung bei Verwendung in einer Tür im geöffneten Zustand (Fig. 6b) und im geschlossenen Zustand (Fig. 6c).
- Fig. 7: zeigt ein schematisches Blockschaltbild einer erfindungsgemäßen Ausführungsform der Schließvorrichtung;
- Fig. 8: zeigt ein weiteres schematisches Blockschaltbild einer erfindungsgemäßen Ausführungsform der Schließvorrichtung;
- Fig. 9a - 9c: zeigen eine weitere erfindungsgemäße Ausführungsform der Übertragungsvorrichtung.

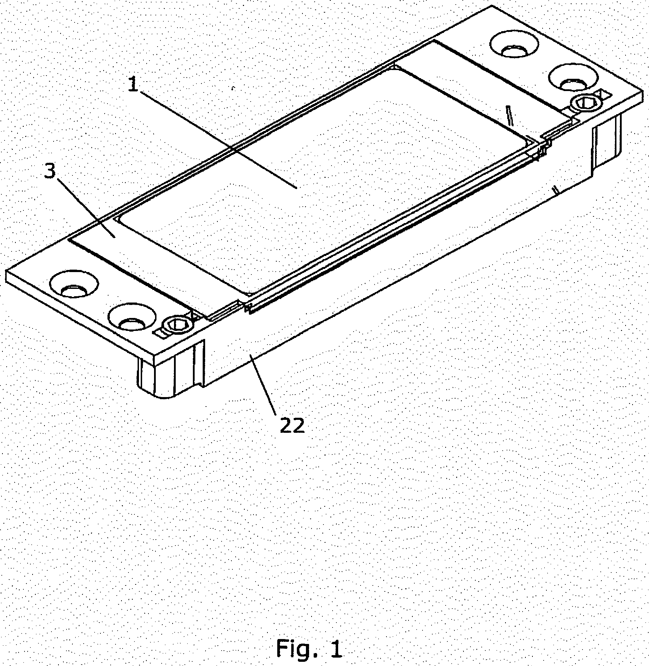

Fig. 1 zeigt eine schematische dreidimensionale Ansicht einer erfindungsgemäßen Ausführungsform der Übertragungsvorrichtung. In dieser Darstellung ist eine erste elektrische Komponente 1 sichtbar, welche in eine Wanne 3 eingesetzt ist. Die Wanne 3 ist wiederum in einem Einbaukasten 22 eingesetzt und in diesem beweglich gelagert.

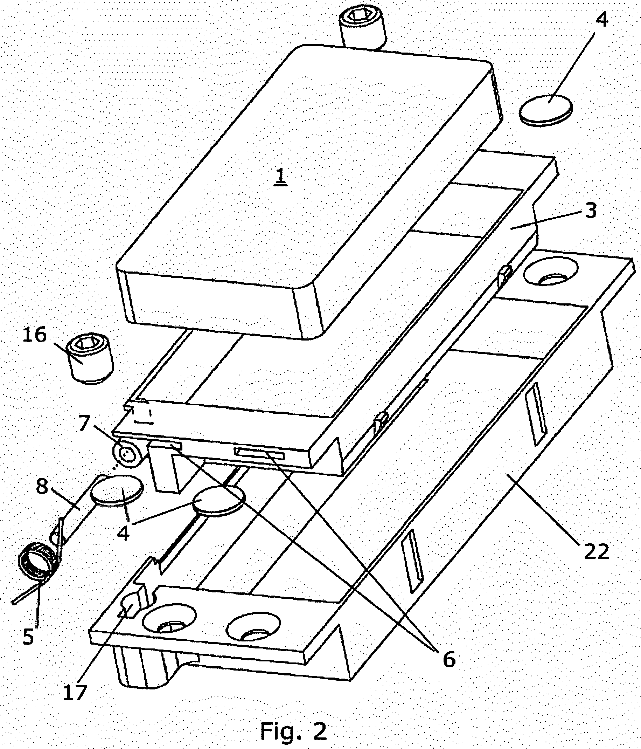

Fig. 2 zeigte eine Explosionsdarstellung dieses Ausführungsbeispiels. Die erste elektrische Komponente 1 ist in die Wanne 3 einsetzbar. Die Wanne 3 ist im Einbaukasten 22 beweglich gelagert. Zu diesem Zweck verfügt die Wanne 3 über seitliche Drehlager 7, in die Achsstifte 8 eingeführt sind. Weiters verfügt der Einbaukasten 22 über Ausnehmungen 17 zur Aufnahme der Achsstifte 8. Die Madenschrauben 16 dienen zur Fixierung der Achsstifte in diesen Ausnehmungen 17.

Zur Positionierung der Wanne 3 im Einbaukasten 22 sind Betätigungsmittel vorgesehen. Diese umfassen die Magnetscheiben 4 und die Rückstellfeder 5. Die Magnetscheiben 4 sind in Ausnehmungen 6 der Wanne 3 eingeführt. Die Rückstellfeder 5 ist an dem oben genannten Achsstift 8 angebracht und als Schenkelfeder ausgeführt, wobei deren beide Schenkel einerseits an der Wanne und andererseits am Einbaukasten 22 angreifen.

Durch diese Kombination zweier Betätigungsmittel wird erreicht, dass die Wanne mit eingesetztem Übertragungsmodul 1 in einer Ruheposition eingeklappt im Einbaukasten 22 verbleibt. Erst bei Annäherung an ein Übertragungsziel, weiches Magneten aufweist oder magnetisierbar ist, wird durch magnetische Kräfte die Wanne 3 aus dem Einbaukasten 22 ausgeklappt und nimmt eine Übertragungsposition ein.

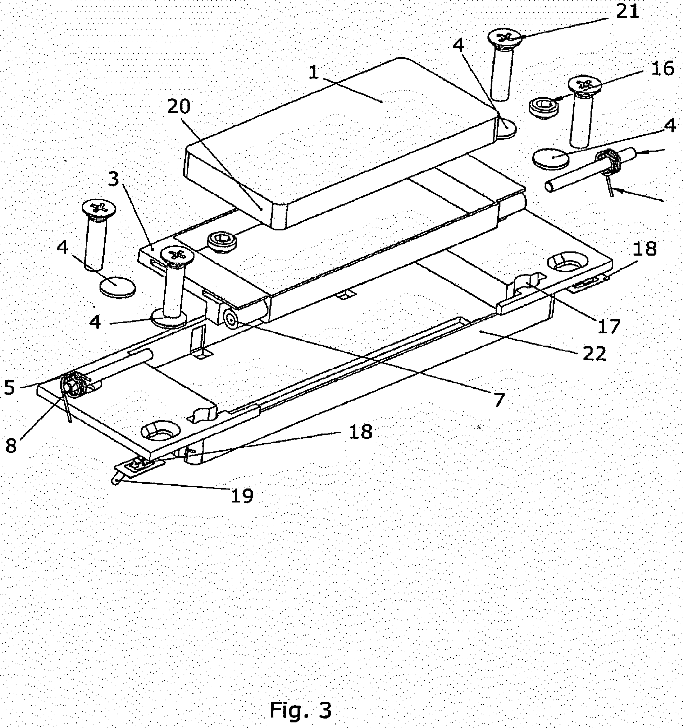

Fig. 3 zeigt eine weitere erfindungsgemäße Ausführungsform. Die erste elektrische Komponente 1 ist in die Wanne 3 einsetzbar. Die Wanne 3 ist im Einbaukasten 22 beweglich gelagert. Zu diesem Zweck verfügt die Wanne 3 über seitliche Drehlager 7, in die Achsstifte 8 eingeführt sind. Weiters verfügt der Einbaukasten 22 über Ausnehmungen 17 zur Aufnahme der Achsstifte 8. Die Madenschrauben 16 dienen zur Fixierung der Achsstifte in diesen Ausnehmungen 17. Zur Positionierung der Wanne 3 im Einbaukasten 22 sind Betätigungsmittel vorgesehen. Diese umfassen die Magnetscheiben 4 und die Rückstellfeder 5. Die Magnetscheiben 4 sind in Ausnehmungen 6 der Wanne 3 eingeführt. Die Rückstellfeder 5 ist an dem oben genannten Achsstift 8 angebracht und als Schenkelfeder ausgeführt.

Zur Energieversorgung ersten elektrischen Komponente 1 sind elektrische Schleifkontakte 18 an der Unterseite des Einbaukastens 22 vorgesehen, die mit Lötanschlüssen 19 versehen sind. Im Betrieb kontaktiert der, elektrisch leitfähig ausgeführte, Achsstift 8 den Schleifkontakt 18. Der Achsstift 8 ist derart ausgeführt, dass er an seinem in das Drehlager 7 eingeführten Ende eine Kontaktfläche 20 der ersten elektrischen Komponente 1 berührt. Somit wird eine elektrische Kontaktierung der ersten elektrischen Komponente 1 durch die Schleifkontakte 18 ermöglicht.

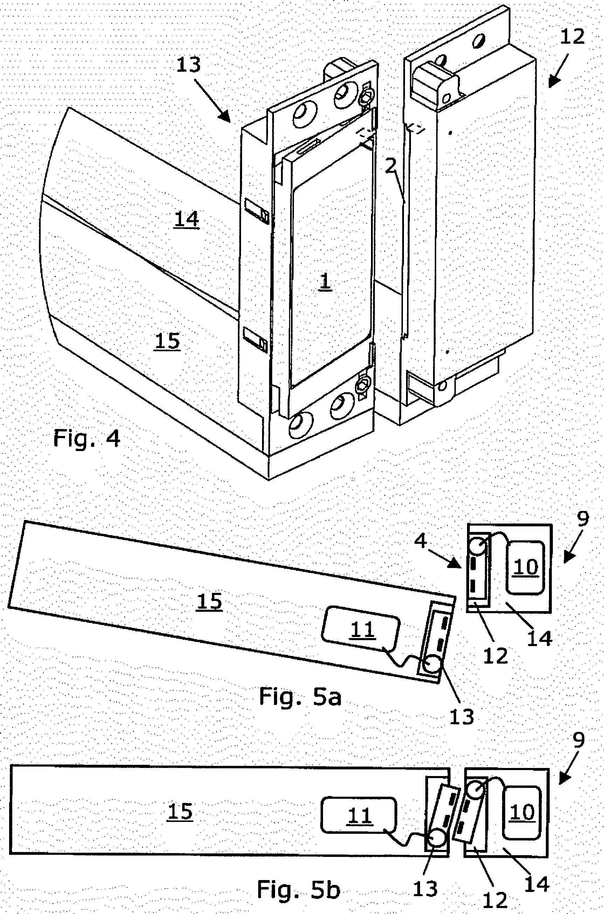

Fig. 4 zeigt einen Türstock 14 und ein Türblatt 15, wobei beide Objekte über erfindungsgemäße Übertragungsvorrichtungen mit elektrischen Komponenten verfügen. Bei Annäherung der ersten elektrischen Komponente 1 an die zweite elektrische Komponente 2 entsteht zwischen den Magnetscheiben dieser Übertragungsvorrichtungen eine Kraft, wobei beide elektrischen Komponenten aus ihrer Ruheposition in Übertragungsposition bewegt werden. Dies ist in Aufsicht schematisch in Fig. 5a und Fig. 5b gezeigt.

Fig. 5a zeigt die Ruheposition, in einem Zustand in den die Kraft der Rückstellfeder 5 die Kraft der Magnetscheiben 4 übersteigt. Fig. 5b zeigt hingegen die Übertragungsposition, wenn die Kraft der Magnetscheiben 4 die Kraft der Rückstellfedern 5 übersteigt. Weiters sind in Fig. 5a und Fig. 5b die Versorgungseinrichtung 10 und die Verbrauchereinrichtung 11 gezeigt. Das Übertragungsziel 9 kann, je nach Richtung der Übertragung entweder die erste Übertragungsvorrichtung 12 oder die zweite Übertragungsvorrichtung 13 sein. Die Übertragungsposition wird erst im komplett geschlossenen Zustand der Tür erreicht, denn erst in diesem Zustand bewirken die sich ansonsten abstoßenden Magnetscheiben 4, dass die Kraft der Rückstellfedern 5 überwunden wird und die Wannen 3 mit den elektrischen Komponenten 1, 2 aus den Einbaukästen 2 ausklappen.

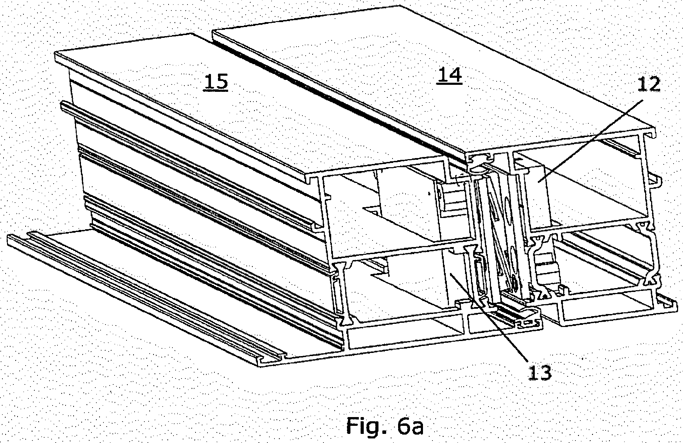

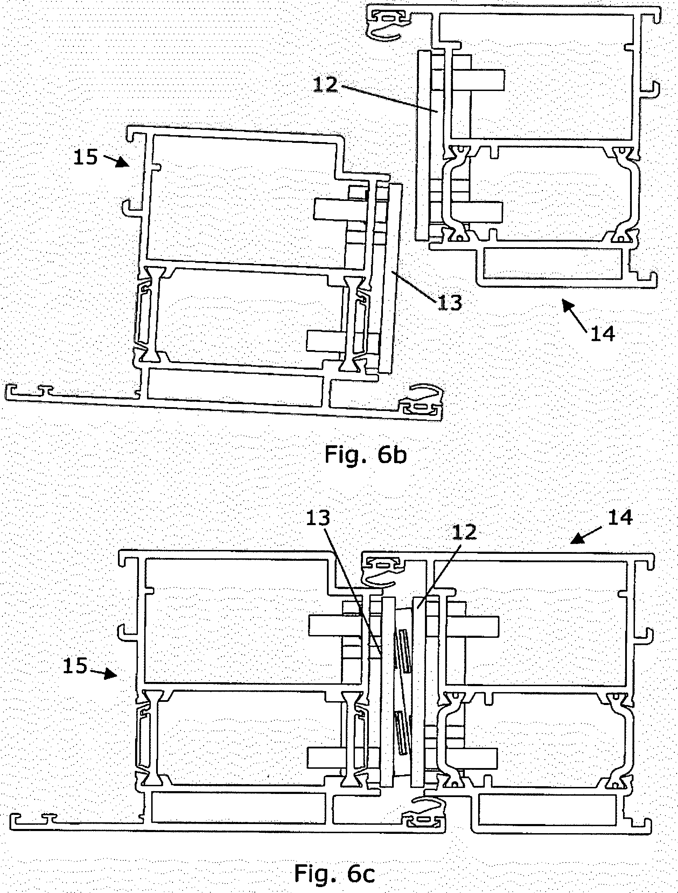

Fig. 6a zeigt ein weiteres Ausführungsbeispiel der erfindungsgemäßen Kopplungsvorrichtung aus der Praxis. In diesem Ausführungsbeispiel sind die erste Übertragungsvorrichtung 12 und die zweite Übertragungsvorrichtung 13 jeweils in einem Türstock 14 bzw. Türblatt 15 integriert, vorzugsweise durch Schrauben oder andere Befestigungsmittel an diesen befestigt, und umfassen elektrische Komponenten 1, 2. Fig. 6b zeigt einen Querschnitt dieser Ausführungsform in der Ruheposition, wenn die Tür geöffnet ist. Die beiden Wannen der Übertragungsvorrichtungen 12, 13 sind aufgrund der Kraft der Rückhaltefedern eingeklappt. Fig. 6c zeigt einen Querschnitt dieser Ausführungsform in Übertragungsposition, wenn die Tür geschlossen ist. Die beiden Wannen der Übertragungsvorrichtungen 12 und 13 sind ausgeklappt und parallel zueinander ausgerichtet. Der Luftspalt zwischen den beiden Übertragungsvorrichtungen wird, auch bei Toleranzen im Abstand zwischen Türstock 14 und Türblatt 15, minimiert.

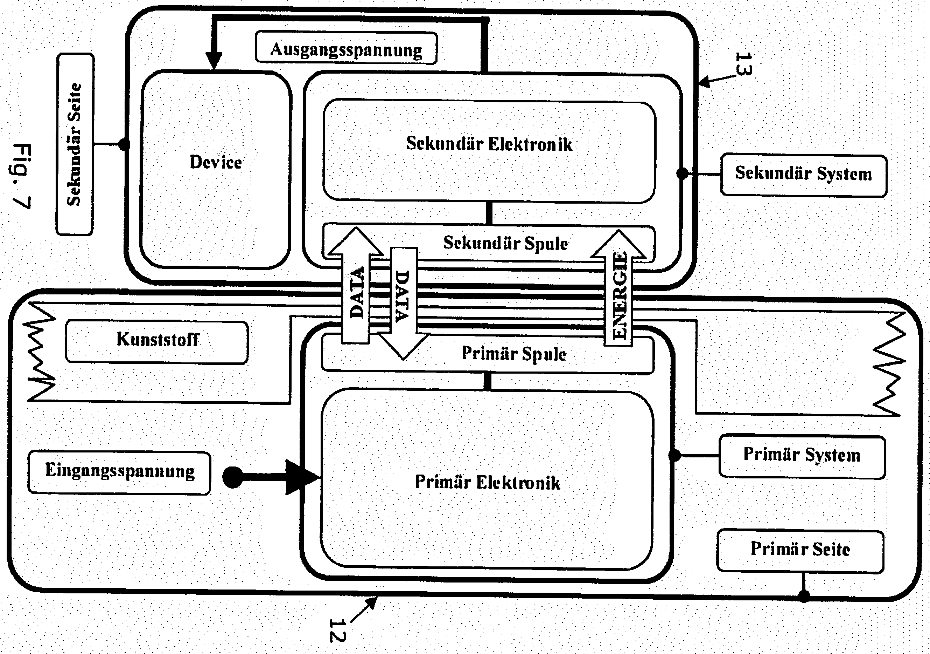

Fig. 7 zeigt ein Blockschaltbild der elektronischen Schaltung in der ersten elektrischen Komponente 1. Auf einer Primärseite ist eine primäre Elektronik mit einer primäre Spule verbunden. Die primäre Elektronik ist mit einer Eingangsspannung gespeist. Die zu übertragenden Daten werden von der primären Elektronik an die primäre Spule weitergegeben, und die primäre Spule moduliert die Daten auf ein niederfrequentes Signal auf. Dieses wird an die sekundäre Spule übergeben, welche aus dem übertragenen Daten Energie gewinnt und diese an die sekundäre Elektronik weitergibt. Weiters können auf der sekundären Seite die übertragenen Daten ausgewertet werden, und es können Daten an die primäre Seite zurückgegeben werden.

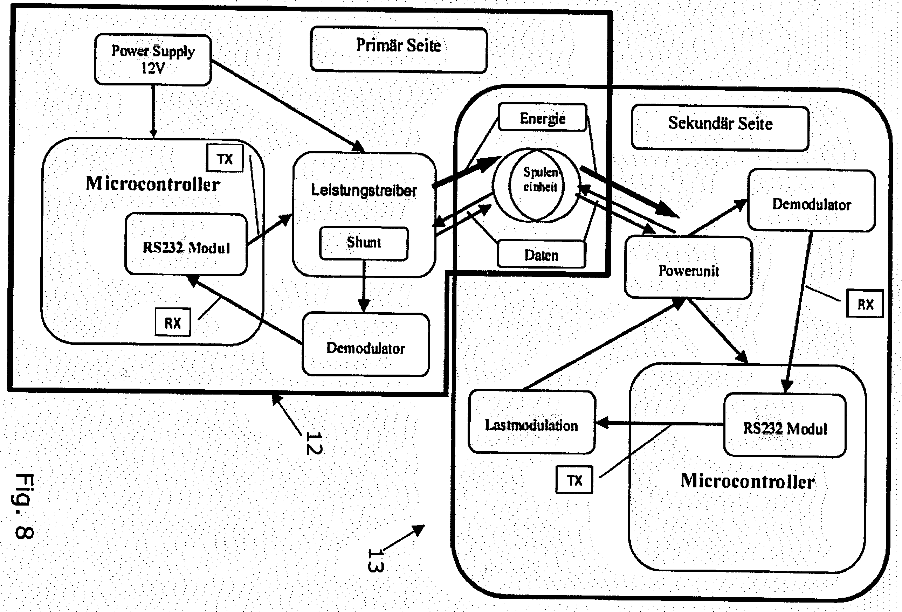

Fig. 8 zeigt ein weiteres Blockschaltbild der Elektronik einer ersten Übertragungsvorrichtung 12 und einer zweiten Übertragungsvorrichtung 13, welche über die gekoppelten elektrischen Komponenten miteinander kommunizieren. Die erste Übertragungsvorrichtung verfügt über eine Energieversorgung, während die zweite Übertragungsvorrichtung 13 durch die übertragene Leistung gespeist wird.

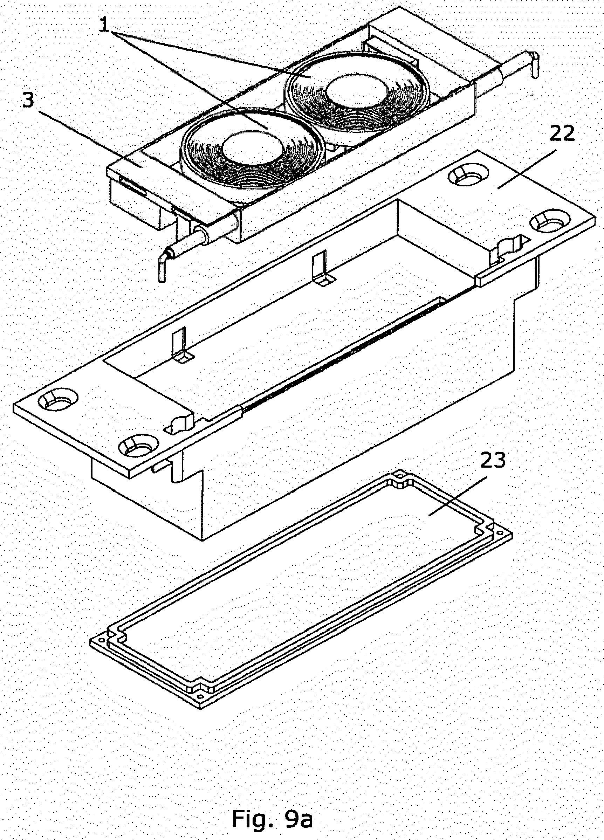

Fig. 9a zeigt eine schematische Ansicht einer weiteren erfindungsgemäßen Ausführungsform der Übertragungsvorrichtung. Eine mehrteilige erste elektrische Komponente 1 ist in eine Wanne 3 eingesetzt und die Wanne 3 ist in einem Einbaukasten 22 beweglich gelagert. Die elektrische Komponente 1 ist in Form zweier Spulen realisiert. Der Einbaukasten 22 ist mit einer unteren Abdeckung 23 versehen.

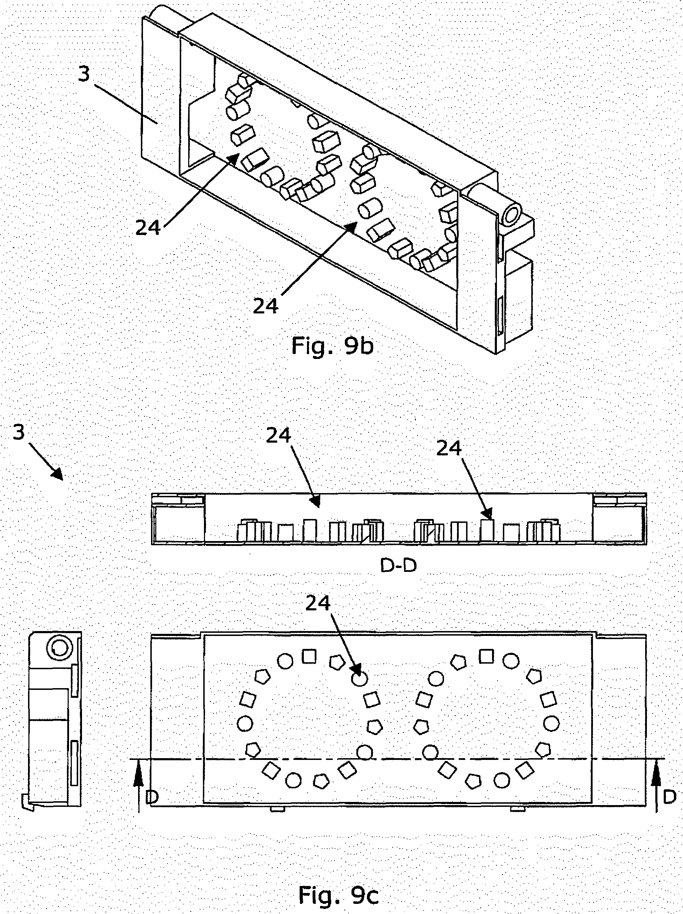

Fig. 9b zeigt eine dreidimensionale Darstellung der Wanne 3 des Ausführungsbeispiels aus Fig. 9a. Zur Halterung der Spulen sind im Inneren der Wanne 3 kreisförmig angeordnete Abstandhalter 24 in Form von Stiften bzw. Erhebungen angeordnet. Die elektrischen Komponenten 1 werden beim Zusammenbau auf die Abstandhalter gelegt und in Polyurethanharz oder ein anderes Füllmaterial eingegossen.

Fig. 9c zeigt die Wanne 3 in Aufriss und Seitenriss sowie als Schnittdarstellung entlang der Linie D-D. Die Abstandhalter 24 dienen als Klebehilfen und weisen unterschiedlichen Querschnitt auf (rechteckig, kreisförmig bzw. fünfeckig), wobei Abstandshalter mit unterschiedlichem Querschnitt jeweils unterschiedlich lang sind.

Beim Zusammenbau kann durch Herausbrechen bestimmter Abstandhalter 24 die gewünschte Position der elektrischen Komponenten 1 gewählt und auf mögliche Abweichungen in der Dicke der elektrischen Komponenten 1 reagiert werden.

Die vorliegende Erfindung beschränkt sich nicht auf die Verwendung erfindungsgemäßer Übertragungsvorrichtungen in Türen oder Fenstern von Gebäuden oder Fahrzeugen. Es sind erfindungsgemäß sämtliche Anwendungen erfindungsgemäßer Übertragungs- oder Kopplungsvorrichtungen durch diese Erfindung umfasst. Dies kann jede Form der kontaktlose Energieübertragung oder kontaktlosen Sensorik umfassen, bei der es darauf ankommt, ein variables Spaltmaß möglichst sicher und robust zu überbrücken und sicherzustellen, dass Sender und Empfänger durch einen möglichst geringen Abstand voneinander getrennt sind.

### Bezugszeichenliste

- 1: Elektrische Komponente
- 2: Elektrische Komponente
- 3: Wanne
- 4: Magnetscheibe
- 5: Rückstellfeder
- 6: Ausnehmung
- 7: Drehlager
- 8: Achsstift
- 9: Übertragungsziel
- 10: Versorgungseinrichtung
- 11: Verbrauchereinrichtung
- 12: Erste Übertragungsvorrichtung
- 13: Zweite Übertragungsvorrichtung
- 14: Türstock
- 15: Türblatt
- 16: Madenschraube
- 17: Ausnehmung
- 18: Schleifkontakt
- 19: Lötanschluss
- 20: Kontaktfläche
- 21: Befestigungsschraube
- 22: Einbaukasten
- 23: Abdeckung
- 24: Abstandhalter

## Patentansprüche

1. Vorrichtung zur drahtlosen Übertragung von elektrischer Leistung und elektrischen Signalen, umfassend eine an einer mechanischen Struktur, insbesondere in einem Gehäuse oder einem Verkleidungsteil angebrachte erste elektrische Komponente (1), wobei die erste elektrische Komponente (1) bewegbar gehaltert ist und Betätigungsmittel zur relativen Bewegung der ersten elektrischen Komponente (1) vorgesehen sind, wobei die Betätigungsmittel dazu eingerichtet sind, in Abhängigkeit von der Lage einer zweiten elektrischen Komponente (2) in Bezug auf die mechanische Struktur durch eine Bewegung der ersten elektrischen Komponente (1) die elektromagnetische Kopplung zwischen der ersten und der zweiten elektrischen Komponente zu verbessern, **dadurch gekennzeichnet, dass** zumindest eine der elektrischen Komponenten (1, 2) in einem Einbaukasten (22) drehbar gelagert ist, wobei zur Aufnahme der elektrischen Komponenten (1, 2) eine Wanne (3) vorgesehen ist, und Betätigungsmittel zur Positionierung der Wanne (3) im Einbaukasten (22) vorgesehen sind.

2. Vorrichtung nach Anspruch 1, **dadurch gekennzeichnet, dass** die mechanische Struktur ein Teil eines veränderlichen mechanischen Zusammenhangs ist, an dem die zweite elektrische Komponente angeordnet ist.

3. Vorrichtung nach Anspruch 2, **dadurch gekennzeichnet, dass** der mechanische Zusammenhang in Form eines Türrahmens mit anhängenden Türblatt, eines Fensterrahmens mit anhängendem Fensterflügel, einer KFZ-Karosserie mit anhängender Schiebetür, Klapptür, Heckklappe oder Schiebedach, oder als lösbarer mechanischer Zusammenhang, insbesondere als in die Führungsschiene eines Haltesystems einschiebbarer Koffer ausgeführt ist.

4. Vorrichtung nach einem der Ansprüche 1 bis 3, **dadurch gekennzeichnet, dass** die erste elektrische Komponente (1) im Gehäuse oder Verkleidungsteil drehbar, verschwenkbar, und/oder verschiebbar an einer Aufhängung, insbesondere einem Drehgelenk, einem Schwenkgelenk, einem Vier- oder Mehrgelenk gelagert ist.

5. Vorrichtung nach einem der Ansprüche 1 bis 4, **dadurch gekennzeichnet, dass** die Betätigungsmittel in Form von Elektromagneten, Permanentmagneten, Federn, Spangen oder dergleichen ausgeführt sind.

6. Vorrichtung nach Anspruch 5, **dadurch gekennzeichnet, dass** als Betätigungsmittel zumindest eine Magnetscheibe (4) und/oder zumindest eine Rückstellfeder (5) vorgesehen ist.

7. Vorrichtung nach einem der Ansprüche 1 bis 6, **dadurch gekennzeichnet, dass** die Wirkkräfte der Betätigungsmittel derart aufeinander abgestimmt sind, dass bei Annäherung der ersten elektrischen Komponente (1) an die zweite elektrische Komponente (2) die Komponenten eine Übertragungsposition einnehmen, und bei Entfernung der ersten elektrischen Komponente (1) von der zweiten elektrischen Komponente (2) die Komponenten eine Ruheposition einnehmen.

8. Vorrichtung nach einem der Ansprüche 1 bis 7, **dadurch gekennzeichnet, dass** die erste elektrische Komponente (1) und/oder die zweite elektrische Komponente (2) zum Senden und/oder Empfangen von induktiven oder kapazitiven elektromagnetischen Signalen ausgeführt ist, wobei die erste elektrische Komponente (1) und/oder die zweite elektrische Komponenten (2) vorzugsweise eine Spule oder eine Kondensatorplatte umfasst.

9. Vorrichtung nach einem der Ansprüche 1 bis 8, **dadurch gekennzeichnet, dass** die erste elektrische Komponente (1) und/oder die zweite elektrische Komponente (2) eine elektronische Schaltung umfasst, die in ein Kunststoffmaterial, vorzugsweise einen Polymerwerkstoff, eingebettet und vorzugsweise vollkommen mit Kunststoff ummantelt ist.

10. Vorrichtung nach einem der Ansprüche 1 bis 9, **dadurch gekennzeichnet, dass** die elektrischen Komponenten (1, 2) keilförmig ausgeführt sind.

11. Vorrichtung nach einem der Ansprüche 1 bis 10, **dadurch gekennzeichnet, dass**, die Betätigungsmittel in Form seitlicher Drehlager (7) an der Wanne (3) zur Aufnahme eines Achsstiftes (8), der eine als Schenkelfeder ausgeführte Rückstellfeder (5) drehbar lagert, ausgeführt sind.

12. Vorrichtung nach Anspruch 11, **dadurch gekennzeichnet, dass** zumindest eine der elektrischen Komponenten (1, 2) zur Energieversorgung über seitliche Kontaktflächen verfügt, die über elektrisch leitfähige Achsstifte (8) mit Schleifkontakten (18) an der Rückseite des Einbaukastens (22) verbunden sind.

13. Elektrische Schließvorrichtung, **dadurch gekennzeichnet, dass** die Schließvorrichtung zumindest eine Vorrichtung nach einem der Ansprüche 1 bis 12 umfasst.

14. Elektrische Schließvorrichtung nach Anspruch 13, **dadurch gekennzeichnet, dass** Betätigungsmittel vorgesehen sind, die derart ausgeführt sind, dass die elektrischen Komponenten (1, 2) in einer Ausgangsstellung in ein Gehäuse eingeklappt sind, und bei Annäherung der elektrischen Komponenten (1, 2) diese durch die Betätigungsmittel ausklappen und sich zueinander ausrichten, wodurch eine Reduzierung des Abstands zwischen den elektrischen Komponenten gewährleistet ist.

15. Elektrische Schließvorrichtung nach Anspruch 13 oder 14, **dadurch gekennzeichnet, dass** eine erste elektrische Komponente (1) mit einer Versorgungseinrichtung (10) verbindbar ist, und eine zweite elektrische Komponente (2) mit einer Verbrauchereinrichtung (11) verbindbar ist.

## Claims

1. A device for the wireless transmission of electric power and electrical signals, comprising a first electrical component (1) attached on a mechanical structure, particularly in a housing or a casing part, wherein the first electrical component (1) is mounted in a movable manner and actuating means are provided for the relative movement of the first electrical component (1), wherein the actuating means are set up to improve the electromagnetic coupling between the first and the second electrical component as a function of the position of a second electrical component (2) in relation to the mechanical structure by means of a movement of the first electrical component (1), **characterised in that** at least one of the electrical components (1, 2) is mounted in a rotatable manner in an installation box (22), wherein a tub (3) is provided for accommodating the electrical components (1, 2), and actuating means are provided for positioning the tub (3) in the installation box (22).

2. The device according to claim 1, **characterised in that** the mechanical structure is part of a changeable mechanical arrangement, on which the second electrical component is arranged.

3. The device according to claim 2, **characterised in that** the mechanical arrangement is realised in the form of a door frame with attached door leaf, a window frame with attached window leaf, a motor-vehicle body with attached sliding door, hinged door, tailgate or sliding roof, or as a releasable mechanical arrangement, particularly as a case which can be pushed into the guide rail of a retaining system.

4. The device according to one of claims 1 to 3, **characterised in that** the first electrical component (1) is mounted in the housing or casing part rotatably, pivotably and/or displaceably on a suspension, particularly a hinged joint, a pivot joint, a four-part or multiple-part joint.

5. The device according to one of claims 1 to 4, **characterised in that** the actuating means are realised in the form of electromagnets, permanent magnets, springs, buckles or the like.

6. The device according to claim 5, **characterised in that** at least one magnetic disc (4) and/or at least one return spring (5) is provided as actuating means.

7. The device according to one of claims 1 to 6, **characterised in that** the effective forces of the actuating means are tuned to one another in such a manner that when the first electrical component (1) approaches the second electrical component (2), the components assume a transmission position, and when the first electrical component (1) moves away from the second electrical component (2), the components assume a rest position.

8. The device according to one of claims 1 to 7, **characterised in that** the first electrical component (1) and/or the second electrical component (2) is realised for sending and/or receiving inductive or capacitive electromagnetic signals, wherein the first electrical component (1) and/or the second electrical component (2) preferably comprises a coil or a capacitor plate.

9. The device according to one of claims 1 to 8, **characterised in that** the first electrical component (1) and/or the second electrical component (2) comprises an electronic switch, which is embedded into a plastic material, preferably a polymer material, and is preferably completely encapsulated with plastic.

10. The device according to one of claims 1 to 9, **characterised in that** the electrical components (1, 2) are realised in a wedge-shaped manner.

11. The device according to one of claims 1 to 10, **characterised in that** the actuating means are realised in the form of lateral rotary bearings (7) on the tub (3) for accommodating an axial pin (8), which rotatably mounts a return spring (5), which is realised as a leg spring.

12. The device according to claim 11, **characterised in that** at least one of the electrical components (1, 2) has lateral contact faces for energy supply, which are connected via electrically conductive axial pins (8) to sliding contacts (18) on the rear side of the installation box (22).

13. An electrical closing device, **characterised in that** the closing device comprises at least one device according to one of claims 1 to 12.

14. The electrical closing device according to claim 13, **characterised in that** actuating means are provided, which are designed in such a manner that the electrical components (1, 2) are folded into a housing in an initial position, and when the electrical components (1, 2) approach, the same pop out due to the actuating means and align with respect to one another, as a result of which a reduction of the spacing between the electrical components is ensured.

15. The electrical closing device according to claim 13 or 14, **characterised in that** a first electrical component (1) can be connected to a supply apparatus (10), and a second electrical component (2) can be connected to a consumer apparatus (11).

## Revendications

1. Dispositif pour la transmission sans fil de puissance électrique et de signaux électriques, comprenant un premier composant électrique (1) monté sur une structure mécanique, en particulier dans un boîtier ou une pièce de coffrage, le premier composant électrique (1) étant fixé de façon mobile et des moyens de commande étant prévus pour le déplacement relatif du premier composant électrique (1), les moyens de commande étant agencés pour pouvoir améliorer le couplage électromagnétique entre le premier et le deuxième composant électrique en fonction de la position d'un deuxième composant électrique (2) par rapport à la structure mécanique grâce à un déplacement du premier composant électrique (1), **caractérisé en ce qu'**au moins un des composants électriques (1, 2) est logé de manière à pouvoir tourner dans un coffret de montage (22), un carter (3) étant prévu pour loger les composants électriques (1, 2) et des moyens de commande étant prévus pour positionner le carter (3) dans le coffret de montage (22).

2. Dispositif selon la revendication 1, **caractérisé en ce que** la structure mécanique est une partie d'un ensemble mécanique modifiable sur lequel est disposé le deuxième composant électrique.

3. Dispositif selon la revendication 2, **caractérisé en ce que** l'ensemble mécanique est exécuté sous la forme d'un cadre de porte avec un vantail de porte suspendu, d'un cadre de fenêtre avec un battant de fenêtre suspendu, d'une carrosserie de véhicule automobile avec une porte coulissante suspendue, d'une porte à charnière, d'un hayon ou d'un toit coulissant ou comme un ensemble mécanique amovible, en particulier comme un coffre insérable dans le rail de guidage d'un système de fixation.

4. Dispositif selon l'une quelconque des revendications 1 à 3, **caractérisé en ce que** le premier composant électrique (1) est logé dans un boîtier ou une pièce de coffrage de manière à pouvoir tourner, pivoter et/ou se déplacer sur une suspension, en particulier sur une articulation à charnière, une articulation pivotante, une articulation à quatre joints ou à joints multiples.

5. Dispositif selon l'une quelconque des revendications 1 à 4, **caractérisé en ce que** les moyens de commande sont exécutés sous la forme d'électroaimants, d'aimants permanents, de ressorts, d'agrafes ou d'éléments analogues.

6. Dispositif selon la revendication 5, **caractérisé en ce qu'**au moins une rondelle magnétique (4) et/ou au moins un ressort de rappel (5) est prévu comme moyen de commande.

7. Dispositif selon l'une quelconque des revendications 1 à 6, **caractérisé en ce que** les forces actives des moyens de commande sont accordées les unes sur les autres de telle manière que lors de l'approche du premier composant électrique (1) du deuxième composant électrique (2), les composants adoptent une position de transmission et que lors de l'éloignement du premier composant électrique (1) du deuxième composant électrique (2), les composants adoptent une position de repos.

8. Dispositif selon l'une quelconque des revendications 1 à 7, **caractérisé en ce que** le premier composant électrique (1) et/ou le deuxième composant électrique (2) est exécuté pour émettre et/ou recevoir des signaux électromagnétiques inductifs ou capacitifs, le premier composant électrique (1) et/ou le deuxième composant électrique (2) comprenant de préférence une bobine ou une plaque de condensateur.

9. Dispositif selon l'une quelconque des revendications 1 à 8, **caractérisé en ce que** le premier composant électrique (1) et/ou le deuxième composant électrique (2) comprend un circuit électronique qui est incoporé dans un matériau plastique, de préférence un matériau polymère et est complètement entouré de préférence de matière plastique.

10. Dispositif selon l'une quelconque des revendications 1 à 9, **caractérisé en ce que** les composants électriques (1, 2) sont exécutés en forme de coin.

11. Dispositif selon l'une quelconque des revendications 1 à 10, **caractérisé en ce que** les moyens de commande sont exécutés sous la forme d'un coussinet de pivotement latéral (7) sur le carter (3) pour recevoir un axe (8) qui loge de manière à pouvoir tourner comme un ressort de rappel (5) exécuté comme un ressort à branches.

12. Dispositif selon la revendication 11, **caractérisé en ce qu'**au moins un des composants électriques (1, 2) dispose pour l'alimentation en énergie de surfaces de contact latérales qui sont reliées par des axes électro-conducteurs (8) à des contacts par frottement (18) sur la face arrière du coffret de montage (22).

13. Dispositif de fermeture électrique, **caractérisé en ce que** le dispositif de fermeture comprend au moins un dispositif selon l'une quelconque des revendications 1 à 12.

14. Dispositif de fermeture électrique selon la revendication 13, **caractérisé en ce que** des moyens de commande sont prévus qui sont exécutés de telle manière que les composants électriques (1, 2) sont repliés dans une position initiale dans un boîtier et que ceux-ci se déplient lors du rapprochement des composants électriques (1, 2) par les moyens de commande et s'orientent l'un par rapport à l'autre, ce qui garantit une réduction de l'espace entre les composants électriques.

15. Dispositif de fermeture électrique selon la revendication 13 ou 14, **caractérisé en ce qu'**un premier composant électrique (1) peut être relié à un système d'alimentation (10) et un deuxième composant électrique (2) à un système consommateur (11).
